# EUROPEAN PATENT APPLICATION

(11) **EP 3 670 417 A1**
(43) Date of publication of application: **24.06.2020**
(21) Application number: 19215396.3
(22) Date of filing: 11.12.2019
(51) Int. Cl.: B66B 7/00

(54) **CAR TO CALL POINT WIRELESS POWER CHARGING**

(30) Priority: 14.12.2018 US 201862779509 P
(71) Applicant: Otis Elevator Company, Farmington, Connecticut 06032 (US)
(72) Inventor: MANES, Enrico, East Hartford, CT Connecticut 06108 (US); SCHMIDT, Walter Thomas, East Hartford, CT Connecticut 06108 (US); THEBEAU, Ronnie E, Farmington, CT Connecticut 06032 (US)
(74) Representative: Dehns

(57) **Abstract**

A wireless power transfer system (200) for wirelessly powering a secondary wireless component (300) using a conveyance apparatus (103) of a conveyance system (101). A secondary wireless component (300) is located along a support or a wall (117a) of the conveyance system (101) in a first location (Al), and includes a wireless electrical power receiver (350). A wireless electrical power transceiver (250) is located along a surface of the conveyance apparatus (103) opposite the wall such that the wireless electrical power transceiver (250) and the wireless electrical power receiver (350) are in a facing spaced relationship defining a gap therebetween. When the wireless electrical power transceiver (250) is located proximate the first location (Al), the wireless electrical power transceiver (250) is configured to wirelessly transfer electrical power to the wireless electrical power receiver (350).

## Description

### BACKGROUND

The embodiments herein relate to the field of conveyance systems, and specifically to a method and apparatus for powering components of a conveyance system.

Conveyance systems, such as, for example, elevator systems, escalator systems, and moving walkways require electric power for operation. Travelling cables typically connect an elevator car of the elevator system to a stationary power source to provide power to the elevator car. Travelling cables add expense, weight, and complexity to elevator car operation and installation, thus improved methods of powering elevator cars are desired.

### BRIEF SUMMARY

According to an embodiment, a wireless power transfer system for wirelessly powering a secondary wireless component using a conveyance apparatus of a conveyance system is provided. The wireless power transfer system including: a secondary wireless component located along a support or a side of the conveyance system in a first location, the secondary wireless component including a wireless electrical power receiver; and a wireless electrical power transceiver located along a surface of the conveyance apparatus opposite the support or the side, the wireless electrical power transceiver and the wireless electrical power receiver being in a facing spaced relationship defining a gap therebetween when the wireless electrical power transceiver is located proximate the first location, wherein the wireless electrical power transceiver is configured to wirelessly transfer electrical power to the wireless electrical power receiver when the wireless electrical power transceiver is located proximate the first location.

In addition to one or more of the features described herein, or as an alternative, further embodiments may include that the conveyance system is an elevator system and the conveyance apparatus is an elevator car.

In addition to one or more of the features described herein, or as an alternative, further embodiments may include that the side is a wall of an elevator hoistway of the elevator system.

In addition to one or more of the features described herein, or as an alternative, further embodiments may include that the secondary wireless component further includes an energy storage device electrically connected to the wireless electrical power receiver.

In addition to one or more of the features described herein, or as an alternative, further embodiments may include that the secondary wireless component further includes at least one of an input device electrically powered by the energy storage device and an output device electrically powered by the energy storage device.

In addition to one or more of the features described herein, or as an alternative, further embodiments may include that the secondary wireless component is an elevator call placement device.

In addition to one or more of the features described herein, or as an alternative, further embodiments may include that the secondary wireless component is an elevator indicator.

In addition to one or more of the features described herein, or as an alternative, further embodiments may include: a wireless electrical power transmitter located along a support or a side of the conveyance system in a second location, wherein the wireless electrical power transmitter is configured to wirelessly transfer electrical power to the wireless electrical power transceiver when the wireless electrical power transceiver is located proximate the second location.

In addition to one or more of the features described herein, or as an alternative, further embodiments may include that the secondary wireless component further includes: an energy storage device electrically connected to the wireless electrical power receiver; and at least one of an input device electrically powered by the energy storage device and an output device electrically powered by the energy storage device, wherein the secondary wireless component is an elevator call placement device.

In addition to one or more of the features described herein, or as an alternative, further embodiments may include: a wireless electrical power transmitter located along a support or a wall of the elevator system in a second location, wherein the wireless electrical power transmitter is configured to wirelessly transfer electrical power to the wireless electrical power transceiver when the wireless electrical power transceiver is located proximate the second location.

According to another embodiment, a conveyance system is provided. The conveyance system including: a conveyance apparatus; and a wireless power transfer system for wirelessly powering a secondary wireless component using the conveyance apparatus of the conveyance system, the wireless power transfer system including: a secondary wireless component located along a support or a side of the conveyance system in a first location, the secondary wireless component including a wireless electrical power receiver; and a wireless electrical power transceiver located along a surface of the conveyance apparatus opposite the support or the side, the wireless electrical power transceiver and the wireless electrical power receiver being in a facing spaced relationship defining a gap therebetween when the wireless electrical power transceiver is located proximate the first location, wherein the wireless electrical power transceiver is configured to wirelessly transfer electrical power to the wireless electrical power receiver when the wireless electrical power transceiver is located proximate the first location.

In addition to one or more of the features described herein, or as an alternative, further embodiments may include that the conveyance system is an elevator system and the conveyance apparatus is an elevator car.

In addition to one or more of the features described herein, or as an alternative, further embodiments may include that the side is a wall of an elevator hoistway of the elevator system.

In addition to one or more of the features described herein, or as an alternative, further embodiments may include that the secondary wireless component further includes an energy storage device electrically connected to the wireless electrical power receiver.

In addition to one or more of the features described herein, or as an alternative, further embodiments may include that the secondary wireless component further includes at least one of an input device electrically powered by the energy storage device and an output device electrically powered by the energy storage device.

In addition to one or more of the features described herein, or as an alternative, further embodiments may include that the secondary wireless component is an elevator call placement device.

In addition to one or more of the features described herein, or as an alternative, further embodiments may include that the secondary wireless component is an elevator indicator.

In addition to one or more of the features described herein, or as an alternative, further embodiments may include that the wireless power transfer system further includes: a wireless electrical power transmitter located along a support or a side of the conveyance system in a second location, wherein the wireless electrical power transmitter is configured to wirelessly transfer electrical power to the wireless electrical power transceiver when the wireless electrical power transceiver is located proximate the second location.

In addition to one or more of the features described herein, or as an alternative, further embodiments may include that the secondary wireless component further includes: an energy storage device electrically connected to the wireless electrical power receiver; and at least one of an input device electrically powered by the energy storage device and an output device electrically powered by the energy storage device, wherein the secondary wireless component is an elevator call placement device.

In addition to one or more of the features described herein, or as an alternative, further embodiments may include: a wireless electrical power transmitter located along a support or a side of the elevator system in a second location, wherein the wireless electrical power transmitter is configured to wirelessly transfer electrical power to the wireless electrical power transceiver when the wireless electrical power transceiver is located proximate the second location.

Technical effects of embodiments of the present disclosure include powering secondary wireless component of an elevator system wirelessly from an elevator car.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure; and
FIG. 2 is a schematic illustration of a wireless power transfer system for the elevator system of FIG. 1, in accordance with an embodiment of the disclosure.

### DETAILED DESCRIPTION

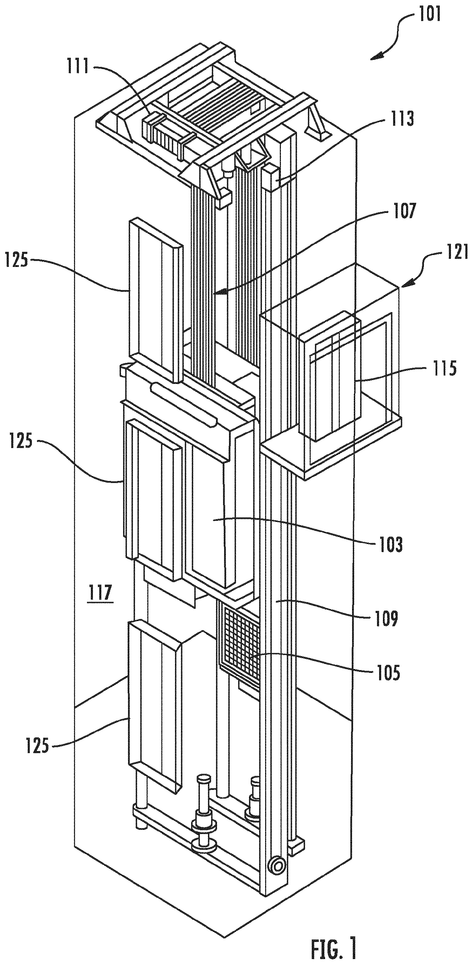

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in Figure 1. In one example, embodiments disclosed herein may be applicable conveyance systems such as an elevator system 101 and a conveyance apparatus of the conveyance system such as an elevator car 103 of the elevator system 101. In another example, embodiments disclosed herein may be applicable conveyance systems such as an escalator system and a conveyance apparatus of the conveyance system such as a moving stair of the escalator system.

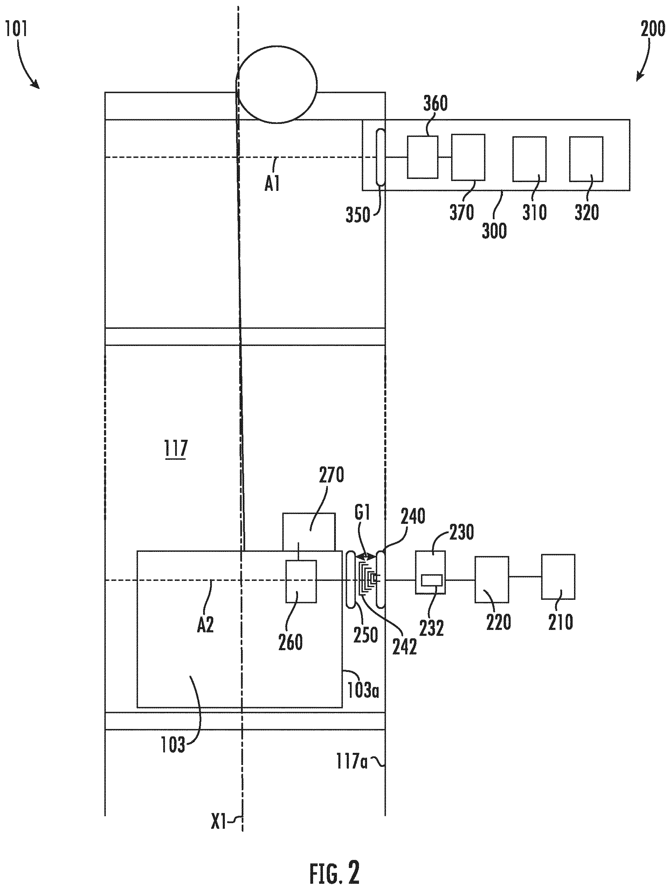

Referring now to FIG. 2 with continued reference to FIG. 1, a view of a wireless power transfer system 200 for use with the elevator system 101 of FIG. 1 is illustrated, in accordance with an embodiment of the present disclosure. It should be appreciated that, although particular systems are separately defined in the schematic block diagrams, each or any of the systems may be otherwise combined or separated via hardware and/or software. The wireless power transfer system 200 may include a power source 210, an AC/DC power converter 220, a power management system 230, a wireless electrical power transmitter 240, a wireless electrical power transceiver 250, an energy storage device management system 260, an energy storage device 270, and a secondary wireless component 300. An energy storage device 270 may not be required if energy harvesting is used.

The power source 210 may be a stationary power source, such as, for example electrical grid power, wind power, solar power, generator power, etc. The power source 210 may provide electrical power using alternating current (AC). The AC electrical power provided by the power source 210 may be three phase AC for higher power greater than about 3kW. The AC/DC power converter 220 is configured to receive the AC electric power from the power source 210 and convert the AC electrical power into DC electrical power. The AC/DC power converter 220 is electrically connected to the power source 210. The electrical connection between the AC/DC power converter 220 and the power source 210 may be hardwired.

The power management system 230 is electrically connected to the AC/DC power converter 220. The electrical connection between the power management system 230 and the AC/DC power converter 220 may be hardwired. The power management system 230 operates as a power controller to supply the power needs of the elevator car 103 proximate a second location A2 and a first location A1. The second location A2 and the first location A1 may be a planes through the elevator shaft 117 about perpendicular to an axis X1 that runs parallel to the elevator shaft 117. The power management system 230 controls switching, directing, or redirecting power to the elevator car 103 through one or more wireless power transmitters 240 as needed to satisfy the power requirements of the elevator car 103. Switching, directing, and redirecting may readily be accomplished employing a bus control switching device 232 of the power management system 230. The bus control switching device 232 may include, but not be limited to, electromechanical and solid state semiconductor switching devices including relays, contactors, solid state contactors as well as semiconductor switching devices such as transistors, FETs, MOSFETS, IGBT's, thyristors, SCR's, and the like. In addition, to facilitate and implement the functionality of the power management system 230, the voltages and frequencies of the power supplied by the power source 210 may be adjusted by the bus control switching device 232. The wireless power transmitters 240 may later adjust the frequency of the electrical power to satisfy the needs of the elevator car 103.

The wireless power transfer system 200 may include a wireless electrical power transmitters 240, as shown in FIG. 2. The electrical power transmitters 240 are electrically connected to the power management system 230. The electrical connection between the electrical power transmitter 240 and the power management system 230 may be hardwired. The wireless electrical power transmitter 240 may be located at a second location A2 along a wall 117a of the elevator shaft 117. The wireless electrical power transmitter 240 may be attached to the wall 117a or embedded in the wall 117a, or in any other desired arrangement. The wireless electrical power transmitter 240 may include a selected number of electrical coils configured to generate a magnetic field 242 when electrical power is run through the electrical coils. The electrical coils of the wireless electrical power transmitter 240 are not shown in FIG. 2 for simplification of the illustration.

The wireless power transfer system 200 may include a wireless electrical power transceiver 250, as shown in FIG. 2. The wireless electrical power transceiver 250 may be located at a location along a surface 103a of the elevator car 103. The wireless electrical power transceiver 250 may be attached to the surface 103a of the elevator car 103 or embedded in the surface 103a of the elevator car 103. The surface 103a of the elevator car 103 is located opposite the wall 117a of the elevator hoistway 117 where the wireless electrical power transmitter 240 is located. Therefore, when the elevator car 103 and the wireless electrical power transceiver 250 is located proximate the second location A2, the wireless electrical power transceiver 250 and the wireless electrical power transmitter 240 at the second location A2 are in a facing spaced relationship and a gap G1 is formed therebetween. The gap G1 is formed between the wireless electrical power transceiver 250 and the wireless electrical power transmitter 240 at the second location A2, as shown in FIG. 2. The wireless electrical power transceiver 250 may include a selected number of electrical coils configured to generate an electric power in response to the magnetic field 242 when the wireless electrical power transceiver 250 is within the transmission range of the magnetic field 242 generated by the wireless electrical power transmitter 240. The electrical coils of the wireless electrical power transceiver 250 are not shown in FIG. 2 for simplification of the illustration.

The electrical power transceiver 250 are electrically connected to the energy storage device management system 260. The electrical connection between the electrical power receiver 250 and the energy storage device management system 260 may be hardwired. The energy storage device management system 260 is configured to condition the electrical power received from the electrical power transceiver 250 and transfer the electrical power to the energy storage device 270 as needed. The energy storage device management system 260 monitors operation data of the energy storage device 270 including but not limited to the state of charge of the energy storage device 270, a state of health of the energy storage device 270, and a temperature of the energy storage device 270. Examples of the energy storage device 270 may include a battery system (e.g., a battery or bank of batteries), fuel cells, flow battery, and others devices capable of storing and outputting electric energy that may be DC. In one embodiment, the energy storage device 270 may store potential energy rather than electrical energy and that potential energy may be utilized to create electrical energy for the elevator car 103a, 130b. The energy storage device 270 may include a battery system, which may employ multiple batteries organized into battery banks. The energy storage device 270 is electrically connected to the elevator car 103. The electrical connection between the energy storage device 270 and the elevator car 103 may be hardwired. The energy storage device 270 may power lighting inside the elevator car 103, fans, an emergency phone, climate controls, communication system, and/or the operating panel of the elevator car 103. The operating panel of the elevator car 103 may consists of floor buttons, a door open button, a door close button, other similar buttons, or may be a touchscreen.

The energy storage device 270 of the elevator car 103 may discharge to power the elevator car 103 and/or a secondary wireless component 300 located along the elevator shaft 117, such as, for example an elevator call placement device, an elevator landing light, indicator, or an elevator landing display device. The secondary wireless component 300 may be wireless and may be solely powered by the discharge of the energy storage device 270, which charges an energy storage device 370 of the secondary wireless component 300. The secondary wireless component 300 comprises a wireless electrical power receiver 350, an energy storage device management system 360, and the energy storage device 370. The secondary wireless component 300 may also include an input device 310, and an output device 320. The input device 310 may be a key pad, button, or touch screen for receiving a user input (e.g., a user input to place an elevator call). The display device 320 may be a computer monitor, light, or touch screen.

The wireless electrical power transceiver 250 may be located at a first location A1 along a wall 117a of the elevator shaft 117. The wireless electrical power receiver 350 may be attached to the wall 117a of the elevator shaft or embedded in the wall 117a of the elevator shaft 117. Alternatively, the wireless electrical power receiver 350 may be attached to a support between two elevator shafts 117. Likewise, when the elevator car 103 and the wireless electrical power transceiver 250 are located proximate the first location A1, the wireless electrical power transceiver 250 and the wireless electrical power receiver 350 are in a facing spaced relationship. The gap G1 will also be present between the wireless electrical power transceiver 250 and the wireless electrical power receiver 350 proximate the first location A1. The wireless electrical power receiver 350 may include a selected number of electrical coils configured to generate an electric power in response to a magnetic field generated the wireless electrical power transceiver 250 when the wireless electrical power receiver 350 is within the transmission range of the magnetic field generated by the wireless electrical power transceiver 350. The electrical coils of the wireless electrical power receiver 350 are not shown in FIG. 2 for simplification of the illustration.

The electrical power receivers 350 are electrically connected to the energy storage device management system 360. The electrical connection between the electrical power receiver 350 and the energy storage device management system 360 may be hardwired. The energy storage device management system 360 is configured to condition the electrical power received from the electrical power receivers 350 and transfer the electrical power to the energy storage device 370 as needed. The energy storage device management system 360 monitors operation data of the energy storage device 370 including but not limited to the state of charge of the energy storage device 370, a state of health of the energy storage device 370, and a temperature of the energy storage device 370. Examples of the energy storage device 370 may include a battery system (e.g., a battery or bank of batteries), fuel cells, flow battery, and others devices capable of storing and outputting electric energy that may be DC. In one embodiment, the energy storage device 270 may store potential energy rather than electrical energy and that potential energy may be utilized to create electrical energy for the elevator car 103a, 130b. The energy storage device 370 may include a battery system, which may employ multiple batteries organized into battery banks. The energy storage device 270 is electrically connected to the input device 310 and the output device 320. The electrical connection between the energy storage device 370 and the input device 310 and the output device 320 may be hardwired.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A wireless power transfer system for wirelessly powering a secondary wireless component using a conveyance apparatus of a conveyance system, the wireless power transfer system comprising:
a secondary wireless component located along a support or a side of the conveyance system in a first location, the secondary wireless component comprising a wireless electrical power receiver; and
a wireless electrical power transceiver located along a surface of the conveyance apparatus opposite the support or the side, the wireless electrical power transceiver and the wireless electrical power receiver being in a facing spaced relationship defining a gap therebetween when the wireless electrical power transceiver is located proximate the first location,
wherein the wireless electrical power transceiver is configured to wirelessly transfer electrical power to the wireless electrical power receiver when the wireless electrical power transceiver is located proximate the first location.

2. The wireless power transfer system of claim 1, wherein the conveyance system is an elevator system and the conveyance apparatus is an elevator car, optionally wherein the side is a wall of an elevator hoistway of the elevator system.

3. The wireless power transfer system of claim 2, wherein the secondary wireless component is an elevator call placement device.

4. The wireless power transfer system of claim 2 or 3, wherein the secondary wireless component is an elevator indicator.

5. The wireless power transfer system of any of claims 2 to 4, wherein the secondary wireless component further comprises:
an energy storage device electrically connected to the wireless electrical power receiver; and
at least one of an input device electrically powered by the energy storage device and an output device electrically powered by the energy storage device,
wherein the secondary wireless component is an elevator call placement device.

6. The wireless power transfer system of any of claims 2 to 5, further comprising:
a wireless electrical power transmitter located along a support or a side of the elevator system in a second location,
wherein the wireless electrical power transmitter is configured to wirelessly transfer electrical power to the wireless electrical power transceiver when the wireless electrical power transceiver is located proximate the second location.

7. The wireless power transfer system of any preceding claim, wherein the secondary wireless component further comprises an energy storage device electrically connected to the wireless electrical power receiver, optionally wherein the secondary wireless component further comprises at least one of an input device electrically powered by the energy storage device and an output device electrically powered by the energy storage device.

8. The wireless power transfer system of any preceding claim, further comprising:
a wireless electrical power transmitter located along a support or a side of the conveyance system in a second location,
wherein the wireless electrical power transmitter is configured to wirelessly transfer electrical power to the wireless electrical power transceiver when the wireless electrical power transceiver is located proximate the second location.

9. A conveyance system, comprising
a conveyance apparatus; and
a wireless power transfer system for wirelessly powering a secondary wireless component using the conveyance apparatus of the conveyance system, the wireless power transfer system comprising:
a secondary wireless component located along a support or a side of the conveyance system in a first location, the secondary wireless component comprising a wireless electrical power receiver; and
a wireless electrical power transceiver located along a surface of the conveyance apparatus opposite the support or the side, the wireless electrical power transceiver and the wireless electrical power receiver being in a facing spaced relationship defining a gap therebetween when the wireless electrical power transceiver is located proximate the first location,
wherein the wireless electrical power transceiver is configured to wirelessly transfer electrical power to the wireless electrical power receiver when the wireless electrical power transceiver is located proximate the first location.

10. The conveyance system of claim 9, wherein the conveyance system is an elevator system and the conveyance apparatus is an elevator car, optionally wherein the side is a wall of an elevator hoistway of the elevator system.

11. The conveyance system of claim 10, wherein the secondary wireless component is an elevator call placement device or an elevator indicator.

12. The conveyance system of claim 10 or 11, wherein the secondary wireless component further comprises:
an energy storage device electrically connected to the wireless electrical power receiver; and
at least one of an input device electrically powered by the energy storage device and an output device electrically powered by the energy storage device,
wherein the secondary wireless component is an elevator call placement device.

13. The conveyance system of any of claims 10 to 12, further comprising:
a wireless electrical power transmitter located along a support or a side of the elevator system in a second location,
wherein the wireless electrical power transmitter is configured to wirelessly transfer electrical power to the wireless electrical power transceiver when the wireless electrical power transceiver is located proximate the second location.

14. The conveyance system of any of claims 9 to 13, wherein the secondary wireless component further comprises an energy storage device electrically connected to the wireless electrical power receiver, optionally wherein the secondary wireless component further comprises at least one of an input device electrically powered by the energy storage device and an output device electrically powered by the energy storage device.

15. The conveyance system of any of claims 9 to 14, wherein the wireless power transfer system further comprises:
a wireless electrical power transmitter located along a side of the conveyance system in a second location,
wherein the wireless electrical power transmitter is configured to wirelessly transfer electrical power to the wireless electrical power transceiver when the wireless electrical power transceiver is located proximate the second location.
